# EUROPEAN PATENT SPECIFICATION

(11) **EP 3 722 510 B1**
(45) Date of publication and mention of the grant of the patent: **31.08.2022**
(21) Application number: 18887164.4
(22) Date of filing: 04.12.2018
(51) Int. Cl.: E02B 17/02, E06C 9/02, E02B 17/00, F03D 13/25, E02B 3/26, E06C 7/18

(54) **MARINE CONSTRUCTION WITH A CONCRETE BOAT LANDING STRUCTURE**
MEERESKONSTRUKTION MIT SCHIFFSANLEGESTRUKTUR AUS BETON
CONSTRUCTION MARINE AVEC STRUCTURE D'EMBARCADÈRE EN BÉTON

(30) Priority: 07.12.2017 ES 201731393
(43) Date of publication of application: 14.10.2020
(73) Proprietor: Esteyco SA, 28036 Madrid (ES)
(72) Inventor: SERNA GARCÍA-CONDE, José Salustiano, 28036 Madrid (ES); FERNÁNDEZ GÓMEZ, Miguel Ángel, 28036 Madrid (ES)
(74) Representative: Tribalyte Ideas
(86) International application number: PCT/ES2018/070775
(87) International publication number: WO 2019/110859

(56) References cited:
- EP-A1- 2 316 721
- EP-A1- 2 428 442
- EP-A1- 2 905 383
- WO-A1-2016/055067
- GB-A- 2 485 556
- US-A1- 2015 307 160

## Description

### FIELD OF THE INVENTION

The present invention relates to a concrete boat landing structure, suitable for being installed in marine constructions, such as towers of offshore wind-driven power generators. Said boat landing structure provides a physical access from a boat to said marine construction for personnel who are going to perform installation, maintenance, or inspection operations therein.

### BACKGROUND OF THE INVENTION

Offshore marine constructions, such as towers for wind-driven power generator turbines for example, must be subjected with certain frequency to inspection and maintenance operations. For this purpose, the technical personnel intended for said operations are transported by boat to the offshore facility. In order for the personnel to access the structure for inspection, the boat used must be positioned in contact with or in the vicinity of the construction (for example, in the shaft of the tower), wherein there is usually arranged a metallic boat landing which the operators can access. The use of boat landings or platforms for personnel to safely access constructions of this type is indispensable, given that the installation points thereof may be subjected to strong surges and tide effects. Accordingly, metallic boat landings likewise act as safety means for personnel while accessing the structure, providing gripping points or surfaces for operators, as well as a shelter from the waves, tide effects, or variations in the sea level, and stable and robust contact points with respect to the boat, such that said boat stays, to the greatest extent possible, in the same relative position during the mentioned access.

Document EP2905383 A1 discloses a marine construction with the features of the preamble of claim 1.

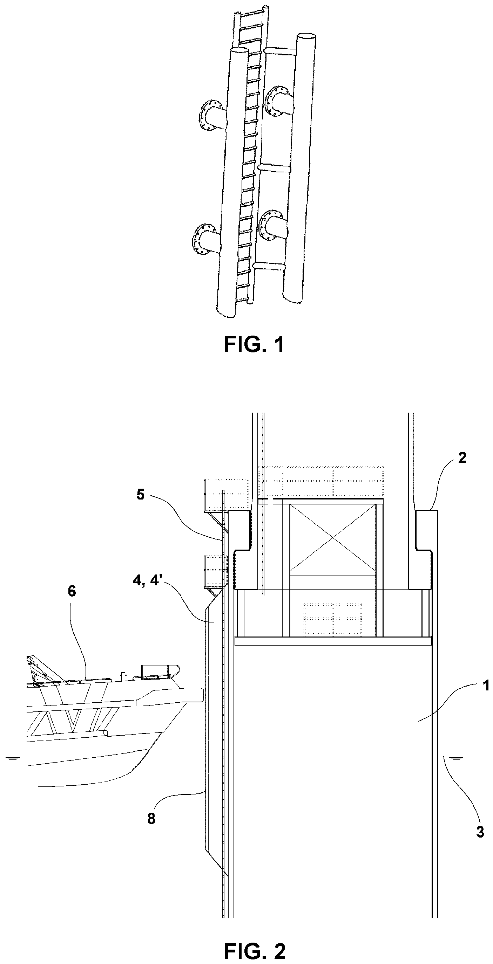

An example of a boat landing applicable to offshore towers is described in patent application DE 102012019554 A1, which discloses a metallic boat landing suitable for being installed in pillars for offshore facilities, comprising essentially two main vertical tubes and a ladder arranged between the tubes for being used by personnel accessing the tower. Figure 1 of the present document shows a preferred embodiment of said boat landing.

During operations for accessing the marine construction, the bow of the boat is positioned in contact with the vertical tubes, preferably pushing against same, such that said contact is maintained in the case of possible wave effects or variations in the sea level. In that position, maintenance personnel may access the ladder of the boat landing from the bow of the boat. To protect operators while going up the ladder, the vertical tubes are arranged in an outer space in relation to the tower, which is occupied by the ladder, such that said tubes act as protections with respect to the boat, operators thereby being kept safe against possible impacts, as they remain in the inner space occupied by the ladder.

In relation to securing the boat landing structure to the marine construction, this is done in different ways, depending on the materials to be secured, i.e., the materials for making the marine construction and the boat landing. In this sense, depending on whether the marine construction is metallic or made of concrete, securing is done by means of screwed-in flanges, joints, welding, and/or coupling bolts, partially embedded in the concrete structures.

Although metallic boat landings are, from the functional viewpoint, a valid solution for being used by operators with reasonable safety margins, they are not free of problems which are still unresolved today in the present technical field. Said problems are fundamentally related to the installation and securing of the boat landings to the structure of the marine construction, the conservation thereof over time, and their robustness against impacts arising from contact with the access boat.

On one hand, making the boat landing as a separate and independent element of the marine construction itself makes it necessary to contemplate, in the process of installing the tower, a specific step intended for securing the boat landing, which usually incorporates designating the contact points with the construction, and the application of the corresponding securing means to favor the integral attachment between both elements, usually by means of attaching with screws. Nevertheless, this step adds complexity to the general process for installing the marine construction, therefore increasing the times associated with said installation. Additionally, the existence of metallic structures embedded in the concrete also represents an added complexity which is not, a priori, desirable.

On the other hand, metallic structures undergo significant wear over time as a consequence of humidity, corrosion, or contact or impact with the boat during inspection operations. This makes it necessary to contemplate, within marine construction maintenance protocols, specific steps intended for applying anticorrosion paint or replacing damaged elements of the boat landing. This problem is even more significant in the metallic structures embedded in concrete which, in the case of corrosion, are very difficult to access for inspection or maintenance.

Finally, the metallic vertical tubes of the boat landing withstand the pushing or the impact of the boat used in operations for accessing the structure. This means that, over time, the structures secured to said structure deteriorate, which may cause allowances in the flanges or even the decoupling thereof in more serious cases.

In light of the preceding technical problems, it has therefore become necessary to consider new boat landing systems for marine constructions which overcome the limitations of the systems of the state of the art. The present invention is considered to be a solution to said need, as a result of a novel concrete boat landing structure suitable for being used in marine constructions, and preferably for offshore wind tower structures.

### BRIEF DESCRIPTION OF THE INVENTION

To solve the drawbacks of the state of the art described above, the object of the present invention is to provide means of access to a concrete marine construction which can be more readily integrated in said construction, preventing an excessive use of embeds in making and/or assembling same, and wherein the installation thereof is performed in a simple manner and in less time than boat landings of the state of the art. The invention furthermore provides means which increase the user safety during operations for accessing and exiting the marine construction with respect to known boat landing structures.

Said object of the invention is preferably carried out by means of a marine construction suitable for supporting a wind-driven power generator comprising, essentially, a concrete shaft intended for being installed and/or transported at a depth with respect to the water level. Advantageously, said marine construction comprises, integrated in said shaft in an integral manner, two substantially vertical and parallel protrusions, projecting out from the shaft of the marine construction, and wherein said protrusions are made partially or entirely of concrete. Likewise, the space comprised between the protrusions houses an access ladder, said access ladder and the protrusions of the shaft configuring a boat landing structure for operation boats.

In a preferred embodiment of the invention, in the anchoring position of the shaft of the marine construction, said structure is partially submerged with respect to the water level.

In another preferred embodiment of the invention, the access ladder is a substantially vertical metallic element, fixed to the protrusions or directly to the shaft of the marine construction.

In another preferred embodiment of the invention, the protrusions do not possess exposed metallic structure components.

In another preferred embodiment of the invention, the protrusions project out from the marine construction at least 30 cm more than what the access ladder housed between said protrusions projects.

In another preferred embodiment of the invention, the length of the protrusions in the vertical direction is such that, with the maximum tide height, the emerged length of said protrusions is equal to or greater than 1 m, and/or with the minimum tide height, the submerged length of the ribs will not be less than 1 m.

In another preferred embodiment of the invention, the protrusions comprise protection elements made of a material other than concrete.

In another preferred embodiment of the invention, the cross-sectional geometry of the protrusions is such that it does not have sharp edges, or its edges are preferably rounded.

In another preferred embodiment of the invention, the cross-sectional geometry of the protrusions is tapered towards the distal end thereof with respect to the shaft.

In another preferred embodiment of the invention, in the longitudinal direction, the distance that the protrusions project with respect to the shaft of said marine construction decreases towards at least one of the ends thereof.

In another preferred embodiment of the invention, the marine construction is an offshore tower with a telescopic shaft.

In another preferred embodiment of the invention, the shaft of the marine construction is made using prefabricated segments, with the protrusions forming the boat landing structure being integrated in one of said segments in an integral manner.

In another preferred embodiment of the invention, the marine construction comprises a work platform suitable for providing an operations, installation, or maintenance surface for technical personnel or equipment intended for that purpose, wherein said platform is substantially horizontal and is made entirely or partially of concrete.

In another preferred embodiment of the invention, the marine construction comprises a plurality of pairs of protrusions with their corresponding access ladders, configured as two or more boat landing points of said construction.

In another preferred embodiment of the invention, the marine construction comprises a lower foundation platform or footing. In said embodiment, the access ladder of the marine construction extends downwardly, so as to provide an access to/from said foundation platform or footing.

In another preferred embodiment of the invention, the concrete protrusions of the boat landing structure are integrated in the marine construction in an integral manner as prefabricated parts. More preferably, the prefabricated parts are parts obtained by means of molding, wherein the protrusions may also be part of said prefabricated parts, being obtained in one and the same molding process. Alternatively, the protrusions are integrally attached to the shaft of the marine construction by means of formwork and concreting.

### DESCRIPTION OF THE DRAWINGS

The preceding and other features and advantages will be better understood from the detailed description of the invention and the preferred embodiments referring to the attached drawings, in which:
Figure 1 shows a known metallic boat landing structure belonging to the state of the art.
Figure 2 illustrates a general profile view of a marine construction and of a boat landing structure according to the present invention, in a preferred embodiment thereof, wherein a boat for accessing said marine construction is likewise depicted.
Figure 3 illustrates a top perspective view of the boat landing structure of the invention, according to a preferred embodiment thereof, wherein the use thereof by a user accessing the marine construction from a boat is shown.
Figures 4-6 show different views of a preferred embodiment of the invention, wherein the boat landing structure is integrated in an offshore telescopic tower suitable for supporting a wind-driven power generator in the upper section of its shaft.
Figures 7-8 show two views of a preferred embodiment of the invention, wherein the marine construction comprises a plurality of pairs of protrusions configured as boat landing points of said construction.

### List of reference numbers in the figures:

| | |
|---|---|
| (1) | Marine construction |
| (2) | Concrete shaft |
| (3) | Water level |
| (4, 4') | Concrete ribs of the boat landing structure |
| (5) | Access ladder |
| (6) | Boat |
| (7) | Operator |
| (8) | Protection elements of the ribs |
| (9) | Wind-driven power generator |
| (10) | Work platform |
| (11) | Foundation platform or footing of the marine construction |

### DETAILED DESCRIPTION OF THE INVENTION

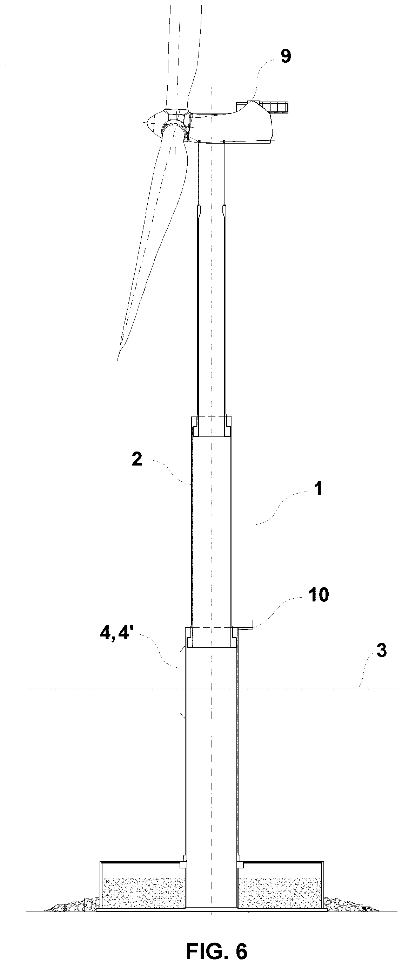

A detailed description of the invention in reference to different preferred embodiments thereof based on Figures 2-8 of the present document is provided below. Said description is offered for illustrative but non-limiting purposes with respect to the claimed invention.

Figure 2 illustrates a profile view of the boat landing structure of the invention, wherein its main elements and general manner of use are depicted. As can be seen in said figure, the boat landing structure is an integral part of a marine construction (1) (for example, a telescopic tower in the embodiment). Said marine construction (1) comprises, essentially, a concrete shaft (2) intended for being installed at a certain depth with respect to the water level (3). In a preferred embodiment of the invention, the shaft (2) is a shaft of a wind-driven power generation tower.

In turn, the boat landing structure of the marine construction (1) comprises two substantially vertical and parallel protrusions (4, 4'), integrated in the shaft (2) of the marine construction (1) and projecting out from same. Said protrusions (4, 4') are made partially of reinforced concrete, without exposed metallic structure components.

The space comprised between the protrusions (4, 4') of the marine construction (1) houses an access ladder (5), intended for being used by personnel accessing the marine construction (1) or an operation boat (6), as part of the inspection or maintenance tasks. As depicted in Figure 2, the operation boat (6) will be kept, while performing said tasks, in contact with or in the vicinity of the boat landing structure of the invention, facilitating the transition of the operations personnel from the boat (6) to the marine construction (1), and vice versa. Likewise and preferably, when the marine construction (1) is installed, the boat landing structure is kept partially submerged, such that its functionality is not affected by relative rising and falling of the water level (3), as a consequence of the surge or the tide.

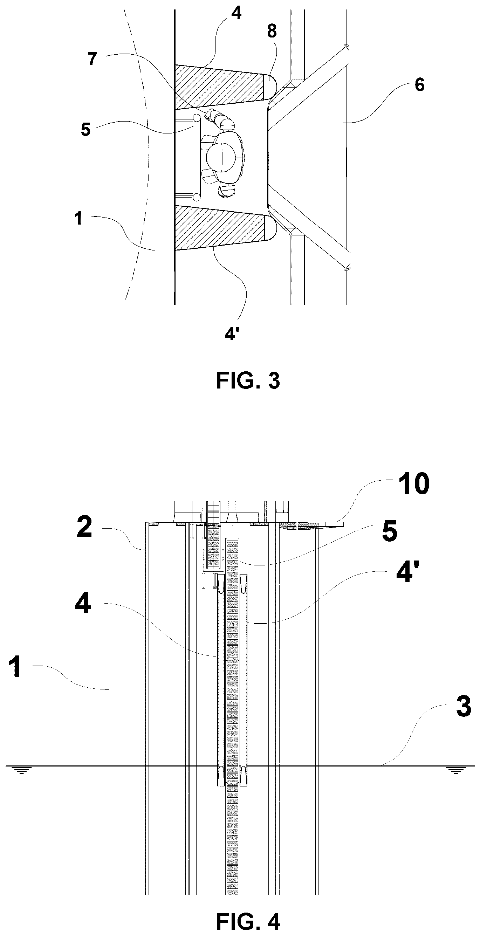

Figure 3 shows a top view of the boat landing structure of a marine construction (1) according to the invention, wherein an operator (7) accessing said construction is depicted. As can be seen in the figure, the boat (6) used for access will be positioned in contact with the boat landing structure, and more specifically in contact with its concrete protrusions (4, 4'), which will act as a stop to protect the access space for the operator (7). Likewise, in order to climb up the marine construction (1), the access ladder (5) will be used. Said access ladder (5) is preferably a substantially vertical metallic element housed in the space comprised between the protrusions (4, 4'), which may be fixed thereto or to the marine construction (1) itself (as shown in Figure 3). As a general rule, to provide a sufficient level of safety in access operations, the protrusions (4, 4') project out from the marine construction (1) at least 30 cm more than what the access ladder (5) projects when it is located between them. In turn, the length of the protrusions (4, 4') in the vertical direction is preferably such that, with the maximum tide height, the emerged length of said protrusions (4, 4') will not be less than 1 m. In the same manner, with the minimum tide height, the submerged length of the protrusions (4, 4') will not be less than 1 m.

The securing elements used for the access ladder (5) may be, for example, joints and/or bolts, which may or may not be embedded inside the concrete body of said construction (1) or of the protrusions (4, 4'). In the event that the ladder (5) is secured to the shaft (2) independently with respect to the protrusions (4, 4'), the operator (7) can climb up without being affected by possible impacts of the boat (6) against the boat landing structure, thereby increasing his or her safety. Said impacts, in the case of strong surges, may even entail a significant risk for the operator (7). In an optional embodiment of the invention, the protrusions (4, 4') may comprise protection elements (8) made of a material other than concrete (for example, comprising rubber or other plastic materials), intended for reinforcing the integrity thereof against the mentioned impacts of the boat (6), also acting a means of protection of the latter. The mentioned protection elements (8) can be replaced with certain frequency in the case of wear as part of the maintenance operations of the marine construction (1).

In relation to their shape, the cross-sectional geometry of the protrusions (4, 4') (Figure 3) is such that it does not have sharp edges, or its edges are preferably rounded. Likewise, the protrusions (4, 4') have a cross-section that tapers towards the distal end thereof with respect to the shaft (2).

In turn, in the longitudinal direction, the distance the ribs (4, 4') project with respect to the shaft (2) of the marine construction (1) preferably decreases towards at least one of the ends thereof. With the mentioned geometry, the risk of the boat (6) being caught on the boat landing structure in the event of a sudden relative drop in the water level (3) is considerably reduced.

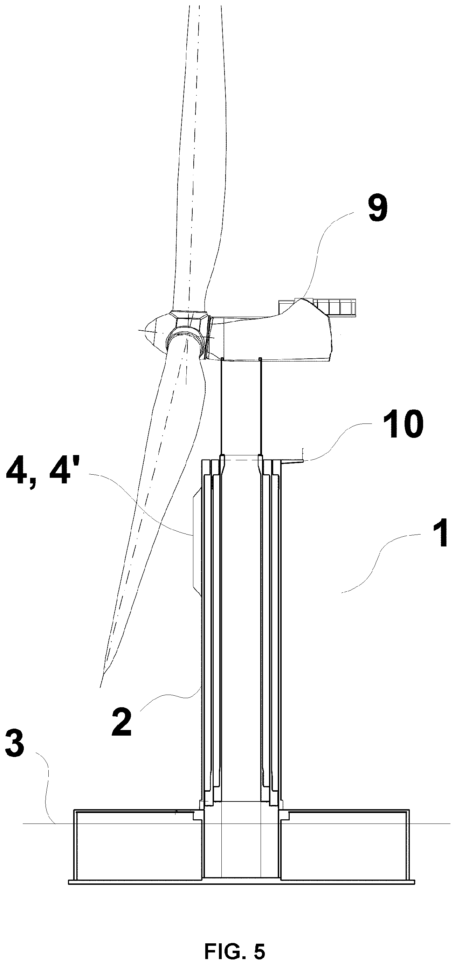

Figures 4-6 show different views of a possible embodiment of the concrete marine construction (1), wherein said construction is an offshore telescopic tower suitable for supporting a wind-driven power generator (element (9), shown in Figures 5-6) in the upper section of its shaft (2). Nevertheless, other tower or marine construction (1) configurations may likewise be used in the scope of the invention, without altering the object thereof.

As mentioned above, the concrete protrusions (4, 4') of the boat landing structure are integrated in the marine construction (1) itself either as prefabricated parts concreted against the shaft (2), or else formed as part of said shaft (2). In both cases, the integration of the protrusions (4, 4') in the shaft (1) must be understood in the scope of the present document as said protrusions (4, 4') having a substantially continuous and integral attachment with the mentioned shaft (2), wherein said continuous and integral attachment comprises the absence of intermittent connections, such as those existing in metallic boat landings of the state of the art (for example, the one illustrated in Figure 1).

In turn, the shaft (2) is preferably made based on prefabricated segments, with the boat landing structure being integrated in one of said segments (i.e., being an integral part thereof). With respect to their construction, it will preferably be carried out on horizontally arranged molds. Therefore, the concrete protrusions (4, 4') integrated in the segment may also be made as part of the process for the prefabrication of said segment horizontally, before being turned and pre-assembled when dry with the rest of the segments for forming the complete shaft (2) of the marine construction (1). In turn, the mold for the prefabrication of the segment equipped with the boat landing structure may also comprise the mold for concreting the protrusions (4, 4') of said structure. Therefore, said protrusions (4, 4') are prefabricated and placed on the mold of the segment to which they will be attached, before concreting said segment. Additionally, it is also possible to use a formwork for concreting the protrusions (4, 4') in the second phase, after having concreted the segment to which they are attached.

As is shown in Figures 2-6, and according to that described in preceding paragraphs, the protrusions (4, 4') are solidly and continuously integrated in the marine construction (1) in an integral manner (either in the shaft (2) or else in one of its segments), that is, without gaps or intermittent connections in the regions for attachment thereof with the shaft (2), therefore providing robust and more sheltered protection from the water than offshore tower boat landings of the state of the art.

In an alternative embodiment of the invention, the protrusions (4, 4') of the boat landing structure are attached to the concrete shaft (2) by means of connection elements which are entirely or partially embedded in the wall of the shaft (2) during concreting.

Moreover and as shown also in Figures 4-6 of the present document, the marine construction (1) may comprise, in its shaft (2), a work platform (10) intended for providing an operations, installation, or maintenance surface for technical personnel or equipment intended for that purpose. Said platform (10) is substantially horizontal and preferably will be made partially or entirely of concrete. Its main functions are to serve as a support surface for the mentioned maintenance tasks, to carry out the operations for hoisting up tower segments (in the case of telescopic shafts, like in the embodiment shown in the figures), or for improving accessibility to the marine construction (1). To that end, the work platform (10) will always be arranged in an emerged region of the shaft (2) of the marine construction (1). Like the boat landing structure of the invention, the work platform (10) may be integrated in one or more segments of the shaft (2), being made as part of the mold of said segments.

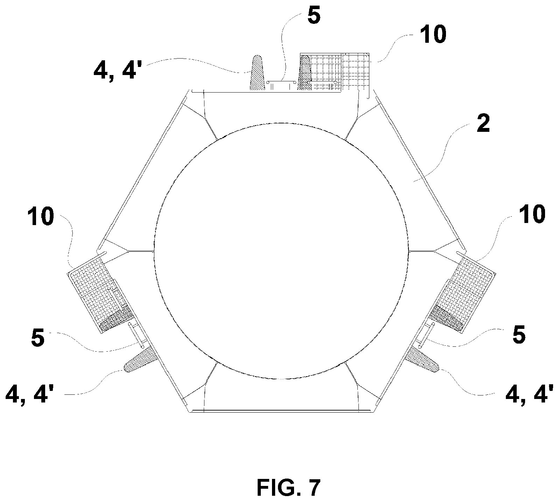

Figures 7-8 show two views of a preferred embodiment of the invention, wherein the marine construction (1) comprises a plurality of pairs of protrusions (4, 4'), configured as two or more boat landing points of said construction (1). This provides the possibility of being able to access to the shaft (2) in the most favorable manner, depending on the conditions of the surge that is taking place in that moment. In the example of Figure 7, the boat landing points are arranged spaced out 120° in relation to the longitudinal axis of the shaft (1).

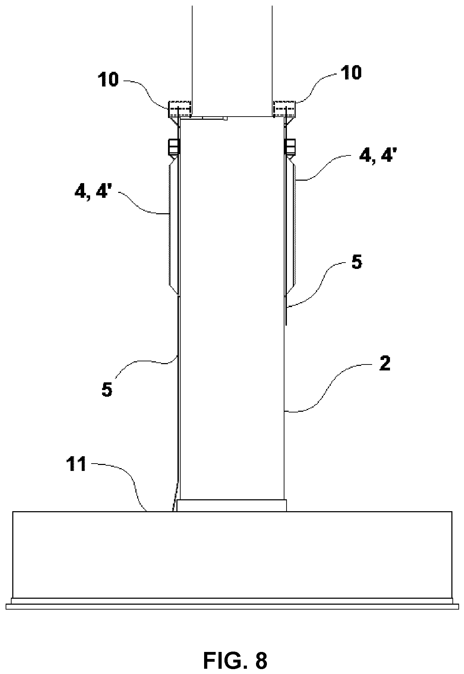

Likewise, in another preferred embodiment of the invention (as shown in Figure 8), the marine construction is a structure equipped with a lower foundation platform or footing (11). In said embodiment, one or more of the access ladders (5) of the marine construction (1) may extend downwardly, so as to provide an access to/from said foundation platform or footing (11), for example in provisional phases of the construction or installation of the mentioned construction (1).

## Claims

1. Marine construction (1) suitable for supporting a wind-driven power generator (9) comprising, essentially, a concrete shaft (2) intended for being installed and/or transported at a depth with respect to the water level (3);
wherein
said marine construction (1) comprises, integrated in said shaft (2) in an integral manner, two substantially vertical and parallel protrusions (4, 4'), projecting out from the shaft (2) of the marine construction (1);
and wherein the space comprised between the protrusions (4, 4') houses an access ladder (5), said access ladder (5) and the protrusions (4, 4') of the shaft (2) configuring a boat landing structure for operation boats (6); **characterized in that** said protrusions (4, 4') are made partially or entirely of concrete.

2. Marine construction (1) according to the preceding claim, wherein the protrusions (4, 4'):
- are arranged on the shaft (2) such that, in the anchoring position of said marine construction (1), said protrusions (4, 4') are partially submerged with respect to the water level (3);
- do not possess exposed metallic structure components; and/or
- project out from the shaft (2) at least 30 cm more than what the access ladder (5) housed between said protrusions (4, 4') projects.

3. Marine construction (1) according to any of the preceding claims, wherein the access ladder (5) is a substantially vertical metallic element, fixed to the protrusions (4, 4') or directly to the shaft (2) of the marine construction (1).

4. Marine construction (1) according to any of the preceding claims, wherein the length of the protrusions (4, 4') in the vertical direction is such that, with the maximum tide height, the emerged length of said protrusions (4, 4') is equal to or greater than 1 m, and/or with the minimum tide height, the submerged length of the ribs (4, 4') will not be less than 1 m.

5. Marine construction (1) according to any of the preceding claims, wherein the protrusions (4, 4') comprise protection elements (8) made of a material other than concrete.

6. Marine construction (1) according to any of the preceding claims, wherein the cross-sectional geometry of the protrusions (4, 4'):
- is such that it does not have sharp edges, or its edges are preferably rounded; and/or
- is tapered towards the distal end thereof with respect to the shaft (2).

7. Marine construction (1) according to any of the preceding claims, wherein, in the longitudinal direction, the distance that the protrusions (4, 4') project with respect to the shaft (2) of said marine construction (1) decreases towards at least one of the ends thereof.

8. Marine construction (1) according to any of the preceding claims, wherein the shaft (2) is made using prefabricated segments, with the protrusions (4, 4') forming the boat landing structure being integrated in one of said segments in an integral manner.

9. Marine construction (1) according to any of the preceding claims, comprising a work platform (10) suitable for providing an operations, installation, or maintenance surface for technical personnel or equipment intended for that purpose, wherein said platform (10) is substantially horizontal and is made entirely or partially of concrete.

10. Marine construction (1) according to any of the preceding claims, wherein the concrete protrusions (4, 4') are integrated in the marine construction (1) in an integral manner as prefabricated parts.

11. Marine construction (1) according to the preceding claim, wherein the prefabricated parts are parts obtained by means of molding.

12. Marine construction (1) according to the preceding claim, wherein the protrusions (4, 4') are part of the prefabricated parts and are obtained with said molding.

13. Marine construction (1) according to any of claims 1-9, wherein the protrusions (4, 4') are integrally attached to the shaft (2) by means of formwork and concreting.

14. Marine construction (1) according to any of the preceding claims, comprising a plurality of pairs of protrusions (4, 4') with their corresponding access ladders (5), configured as two or more boat landing points of said construction (1).

15. Marine construction (1) according to any of the preceding claims, wherein said marine construction (1):
- is an offshore tower with a telescopic shaft (2); and/or
- comprises a lower foundation platform or footing (11), and wherein the access ladder (5) of the marine construction (1) extends downwardly, so as to provide an access to/from said foundation platform or footing (11).

## Patentansprüche

1. Meereskonstruktion (1), ausgelegt zur Aufnahme eines Windkraftgenerators (9), bestehend im wesentlichen aus einem Betonschaft (2), der zur Anbringung und/oder zum Transport unter dem Wasserspiegel (3) vorgesehen ist;
wobei die genannte Meereskonstruktion (1) zwei im wesentlichen vertikale und parallele Vorsprünge (4, 4') aufweist, die aus dem Schaft (2) der Meereskonstruktion (1) herausragen und einstückig in den genannten Schaft (2) integriert sind;
und wobei in dem Raum zwischen den Vorsprüngen (4, 4') eine Zugangsleiter (5) angeordnet ist, wobei die genannte Zugangsleiter (5) und die Vorsprünge (4, 4') des Schafts (2) eine Schiffsanlegestruktur für Arbeitsboote (6) bilden; **dadurch gekennzeichnet, dass** die genannten Vorsprünge (4, 4') teilweise oder ganz aus Beton bestehen.

2. Meereskonstruktion (1) nach vorstehendem Anspruch, wobei die Vorsprünge (4, 4'):
- so am Schaft (2) angeordnet sind, dass die genannten Vorsprünge (4, 4') in der Verankerungsstellung der genannten Meereskonstruktion (1) teilweise unter dem Wasserspiegel (3) liegen;
- keine freiliegenden Metallstrukturteile aufweisen; und/oder
- mindestens 30 cm weiter aus dem Schaft (2) herausragen als die zwischen den genannten Vorsprüngen (4, 4') angeordnete Zugangsleiter (5).

3. Meereskonstruktion (1) nach einem der vorstehenden Ansprüche, wobei die Zugangsleiter (5) ein im wesentlichen vertikales und an den Vorsprüngen (4, 4') oder direkt am Schaft (2) der Meereskonstruktion (1) befestigtes Metallelement ist.

4. Meereskonstruktion (1) nach einem der vorstehenden Ansprüche, wobei die Länge der Vorsprünge (4, 4') in vertikaler Richtung so bemessen ist, dass die aus dem Wasser ragende Länge der genannten Vorsprünge (4, 4') bei höchstem Gezeitenstand gleich oder größer als 1 m ist und/oder die untergetauchte Länge der Rippen (4, 4') bei niedrigstem Gezeitenstand mindestens 1 m beträgt.

5. Meereskonstruktion (1) nach einem der vorstehenden Ansprüche, wobei die Vorsprünge (4, 4') Schutzelemente (8) aus einem anderen Material als Beton aufweisen.

6. Meereskonstruktion (1) nach einem der vorstehenden Ansprüche, wobei die Querschnittsgeometrie der Vorsprünge (4, 4'):
- nicht scharfkantig oder vorzugsweise mit abgerundeten Kanten ausgeführt ist; und/oder
- zum distalen Ende derselben relativ zum Schaft (2) hin verjüngt ist.

7. Meereskonstruktion (1) nach einem der vorstehenden Ansprüche, wobei das Maß, um das die Vorsprünge (4, 4') aus dem Schaft (2) der genannten Meereskonstruktion (1) herausragen, in Längsrichtung zum Ende mindestens einer derselben hin abnimmt.

8. Meereskonstruktion (1) nach einem der vorstehenden Ansprüche, bei der der Schaft (2) aus Fertigteilsegmenten besteht, wobei die die Schiffsanlegestruktur bildenden Vorsprünge (4, 4') einstückig in eines der genannten Segmente integriert sind.

9. Meereskonstruktion (1) nach einem der vorstehenden Ansprüche mit einer Arbeitsplattform (10), die zur Bereitstellung einer Arbeits-, Montage- oder Wartungsfläche für technisches Personal oder entsprechende Materialien vorgesehen ist, wobei die genannte Plattform (10) im wesentlichen horizontal ist und ganz oder teilweise aus Beton besteht.

10. Meereskonstruktion (1) nach einem der vorstehenden Ansprüche, wobei die Betonvorsprünge (4, 4') als Fertigteile einstückig in die Meereskonstruktion (1) integriert sind.

11. Meereskonstruktion (1) nach vorstehendem Anspruch, wobei die Fertigteile durch Formverfahren gefertigte Teile sind.

12. Meereskonstruktion (1) nach vorstehendem Anspruch, wobei die Vorsprünge (4, 4') Bestandteil der Fertigteile sind und im Zuge des genannten Formverfahrens gebildet werden.

13. Meereskonstruktion (1) nach einem der Ansprüche 1 bis 9, wobei die Vorsprünge (4, 4') durch Verschalen und Betonieren einstückig mit dem Schaft (2) verbunden wurden.

14. Meereskonstruktion (1) nach einem der vorstehenden Ansprüche, umfassend eine Vielzahl von paarweisen Vorsprüngen (4, 4') mit den zugehörigen Zugangsleitern (5), die als zwei oder mehr Schiffsanlegestellen der genannten Konstruktion (1) ausgebildet sind.

15. Meereskonstruktion (1) nach einem der vorstehenden Ansprüche, wobei die genannte Meereskonstruktion (1):
- ein Offshore-Turm mit einem Teleskopschaft (2) ist; und/oder
- eine untere Fundamentplattform oder Basis (11) aufweist, wobei die Zugangsleiter (5) der Meereskonstruktion (1) nach unten erweitert ist, um so den Zugang zu/von der genannten Fundamentplattform oder Basis (11) zu ermöglichen.

## Revendications

1. Construction (1) marine appropriée pour supporter un générateur (9) d'énergie éolienne comprenant, essentiellement, un arbre (2) en béton destiné à être installé et/ou transporté à une profondeur par rapport au niveau de l'eau (3) ;
dans laquelle ladite construction (1) marine comprend, intégrées dans ledit arbre (2) de manière intégrale, deux saillies (4, 4') sensiblement verticales et parallèles, faisant saillie de l'arbre (2) de la construction (1) marine ;
et dans laquelle l'espace compris entre les saillies (4, 4') loge une échelle (5) d'accès, ladite échelle (5) d'accès et les saillies (4, 4') de l'arbre (2) configurant une structure d'embarcadère pour des bateaux (6) d'opération ; **caractérisé en ce que** lesdites saillies (4, 4') sont faites partiellement ou entièrement en béton.

2. Construction (1) marine selon la revendication précédente, dans laquelle les saillies (4, 4') :
- sont disposées à l'arbre (2) de telle sorte que, dans la position d'ancrage de ladite construction (1) marine, lesdites saillies (4, 4') sont partiellement immergées par rapport au niveau de l'eau (3) ;
- ne possèdent pas de composants de structure métallique exposés ; et/ou
- dépassent de l'arbre (2) d'au moins 30 cm de plus que ce que dépasse l'échelle (5) d'accès logée entre lesdites saillies (4, 4').

3. Construction (1) marine selon l'une quelconque des revendications précédentes, dans laquelle l'échelle (5) d'accès est un élément métallique sensiblement vertical, fixé aux saillies (4, 4') ou directement à l'arbre (2) de la construction (1) marine.

4. Construction (1) marine selon l'une quelconque des revendications précédentes, dans laquelle la longueur des saillies (4, 4') dans le sens vertical est telle que, avec la hauteur de marée maximale, la longueur émergée desdites saillies (4, 4') est égale ou supérieure à 1 m, et/ou avec la hauteur de marée minimale, la longueur immergée des nervures (4, 4') ne sera pas inférieure à 1 m.

5. Construction (1) marine selon l'une quelconque des revendications précédentes, dans laquelle les saillies (4, 4') comprennent des éléments (8) de protection réalisés dans un matériau autre que le béton.

6. Construction (1) marine selon l'une quelconque des revendications précédentes, dans laquelle la géométrie de la section transversale des saillies (4, 4') :
- est telle qu'elle ne présente pas d'arêtes vives, ou ses arêtes sont de préférence arrondies ; et/ou
- est effilée vers son extrémité distale par rapport à l'arbre (2).

7. Construction (1) marine selon l'une quelconque des revendications précédentes, dans laquelle, dans la direction longitudinale, la distance dont les saillies (4, 4') font saillie par rapport à l'arbre (2) de ladite construction (1) marine diminue vers au moins l'une des extrémités de celle-ci.

8. Construction (1) marine selon l'une quelconque des revendications précédentes, dans laquelle l'arbre (2) est réalisé à l'aide de segments préfabriqués, les saillies (4, 4') formant la structure d'embarcadère étant intégrées dans l'un desdits segments de manière solidaire.

9. Construction (1) marine selon l'une quelconque des revendications précédentes, comprenant une plateforme (10) de travail apte à fournir une surface d'exploitation, d'installation ou de maintenance pour du personnel technique ou des équipements destinés à cet effet, dans laquelle ladite plateforme (10) est sensiblement horizontale et est réalisée entièrement ou partiellement en béton.

10. Construction (1) marine selon l'une quelconque des revendications précédentes, dans laquelle les saillies en béton (4, 4') sont intégrées dans la construction (1) marine de manière intégrale en tant que pièces préfabriquées.

11. Construction (1) marine selon la revendication précédente, dans laquelle les pièces préfabriquées sont des pièces obtenues par moulage.

12. Construction (1) marine selon la revendication précédente, dans laquelle les saillies (4, 4') font partie des pièces préfabriquées et sont obtenues avec ledit moulage.

13. Construction (1) marine selon l'une quelconque des revendications 1 à 9, dans laquelle les saillies (4, 4') sont intégralement fixées à l'arbre (2) au moyen d'un coffrage et d'un bétonnage.

14. Construction (1) marine selon l'une quelconque des revendications précédentes, comprenant une pluralité de paires de saillies (4, 4') avec leurs échelles (5) d'accès correspondantes, configurées comme deux ou plusieurs points d'embarcadère de ladite construction (1).

15. Construction (1) marine selon l'une quelconque des revendications précédentes, dans laquelle ladite construction (1) marine :
- est une tour offshore avec un arbre (2) télescopique ; et/ou
- comprend une plate-forme (11) ou un pied de fondation inférieur, et dans laquelle l'échelle (5) d'accès de la construction (1) marine s'étend vers le bas, de manière à fournir un accès à/de ladite plate-forme (11) ou pied de fondation.
